**Europäisches Patentamt**

**European Patent Office**

**Office européen des brevets**

(11) Publication number: **0 115 174**
**B1**

# EUROPEAN PATENT SPECIFICATION

(45) Date of publication of patent specification: **19.04.89**

(21) Application number: **83307828.0**

(22) Date of filing: **21.12.83**

(51) Int. Cl.⁴: **F 16 F 9/10, B 60 K 5/12**

(54) Hydraulic-elastomeric mount.

(30) Priority: **27.01.83 US 461612**

(43) Date of publication of application:
**08.08.84 Bulletin 84/32**

(45) Publication of the grant of the patent:
**19.04.89 Bulletin 89/16**

(84) Designated Contracting States:
**DE FR GB**

(56) References cited:
**EP-A-0 058 408**
**EP-A-0 068 395**
**DE-A-3 218 947**
**FR-A-2 384 999**
**GB-A-2 041 485**
**US-A-4 159 091**

(73) Proprietor: **GENERAL MOTORS CORPORATION**
**General Motors Building 3044 West Grand**
**Boulevard**
**Detroit Michigan 48202 (US)**

(72) Inventor: **Muzechuk, Richard Allen**
**1109 Pepper Hill Drive**
**Kettering Ohio 45429 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to a hydraulic-elastomeric mount as specified in the preamble of claim 1, for example as disclosed in EP-A-68 395.

In a typical mount such as is used for the resilient mounting of a vehicle engine, an elastomeric body is employed made of natural or synthetic rubber. Such materials have inherently low coefficients of damping, and it has been found that many of the vibratory inputs to the vehicle would be better isolated if the engine mounting system exhibited a higher coefficient of damping. It is possible to provide an increased damping coefficient by the selection of certain rubber polymers and by the use of additives, but so far this approach has proved unsatisfactory because it results in adverse affects on other properties of the rubber. Furthermore, this approach produces large damping for all vibratory inputs regardless of frequency or amplitude.

There is accordingly a major desire for a cost-effective means of providing increased damping that does not limit the choice of rubber used for the elastomeric body. There is also the desire that the amount of damping be controllable as to its magnitude for vibratory inputs of various frequencies and amplitudes. Furthermore, the damping should be achieved in a manner that does not compromise the many desired features in the typical elastomeric mount design, and particularly those of major importance, such as specific stiffness ratios along the major axes and specific configurations to suit packaging space restrictions.

Various mount designs have been proposed involving adding hydraulic damping. However, such mounts generally fail to meet all the design criteria, in particular damping controllability, or they are relatively complex and difficult to manufacture with a high degree of sealed integrity.

Aaother exmple of a prior proposal for a hydraulic-elastomeric mount is disclosed in US-A-4 159 091.

The present invention is concerned with a hydraulic-elastomeric mount which, at least in substance, has the potential to meet the design criteria.

To this end a hydraulic-elastomeric mount in accordance with the present invention is characterised by the features specified in the characterising portion of claim 1.

The present invention thereby makes available a hydraulic-elastomeric mount of a design which is potentially very simple, and easy to manufacture with excellent sealed integrity, and which is capable of being produced as a family of mounts providing a wide range of desired characteristics to various degrees, without compromising the desired vibration-isolating characteristics of the elastomeric body itself.

In a preferred embodiment of a hydraulic-elastomeric mount in accordance with the present invention, a pair of mounting members are interconnected by a hollow elastomeric body; for use as a vehicle engine mount, one of the mounting members is secured to the engine, and the other mounting member is secured to the engine-supporting structure of the vehicle. The mount includes an elastomeric diaphragm that is configured to close the elastomeric body and form therewith a closed cavity. A rigid partition is effective to divide the cavity into a primary chamber enclosed by the elastomeric body and a secondary chamber enclosed by the diaphragm. A liquid is contained in the chambers, and the partition is provided with an orifice which interconnects the chambers. The liquid is thus forced to flow at a restricted rate from the primary to the secondary chamber upon contraction of the primary chamber, and in the opposite direction on expansion of the primary chamber, to provide a damping effect as the one mounting member is caused to vibrate relative to the other. The diaphragm is further configured to extend about and also over the periphery of the partition, and thereby form a seal between the chambers and the exterior of the mount as well as forming a seal between the chambers. Moreover, the diaphragm is configured to have a certain compliance at its rim to permit limited substantially free or soft travel of the partition below a predetermined vibration amplitude of one mounting member relative to the other, but prevent such relative travel above such amplitudes, so that flow through the orifice to effect damping is dependent upon the predetermined vibration amplitude.

Thus in a hydraulic-elastomeric mount in accordance with the present invention the diaphragm is trifunctional, in that in addition to forming the secondary chamber it also serves to provide amplitude control and provide multiple sealing. Furthermore, the total design is such that a wide family of mounts can be made available, this being possible by designing the orifice as part of a separate and relatively movable part which is mounted on the partition with limited free travel so as to permit small inputs without damping, for further amplitude control. This design also offers a selection of orifice diameters, lengths and shapes for various types of damping responsiveness.

Further extension of the family is available by varying the compliance and the durometer value of the diaphragm, and by varying the wall thickness, the shape and the durometer value of the hollow elastomeric body interconnecting the mounting members.

Another advantage is that the hollow elastomeric body can be formed by the use of a standard two-piece mould with no loose cores, using either injection or transfer moulding, and with little excess rubber needing to be removed.

Furthermore, assembly may be simplified by the formation of the orifice, the partition and the diaphragm as one subassembly, and by the formation of the elastomeric body in a moulding operation with one of the mounting members and a retainer as a second subassembly, which is filled with the hydraulic fluid prior to final assembly. At final assembly, the said two subassemblies may be simply brought together, with the retainer then being crimped or otherwise fixed to the other of the mounting members to retain all the parts of the mount together.

In the drawings:

Figure 1 is a sectional view of one embodiment of a hydraulic-elastomeric mount in accordance with the present invention;

Figure 2 is a sectional view on the line 2-2 in Figure 1, in the direction of the arrows;

Figure 3 is an exploded view of the mount shown in Figure 1;

Figure 4 diagrammatically shows a mechanical analogy of a hydraulic-elastomeric mount in accordance with the present invention;

Figures 5 to 8 are graphs showing various characteristics of a hydraulic-elastomeric mount in accordance with the present invention (solid-line curves) compared with those of a typical conventional mount having only an elastomeric body (dash-line curves); and

Figures 9 and 10 are graphs showing various characteristics of a hydraulic-elastomeric mount in accordance with the present invention, both with hydraulic fluid (solid-line curves) and without hydraulic fluid (dash-line curves).

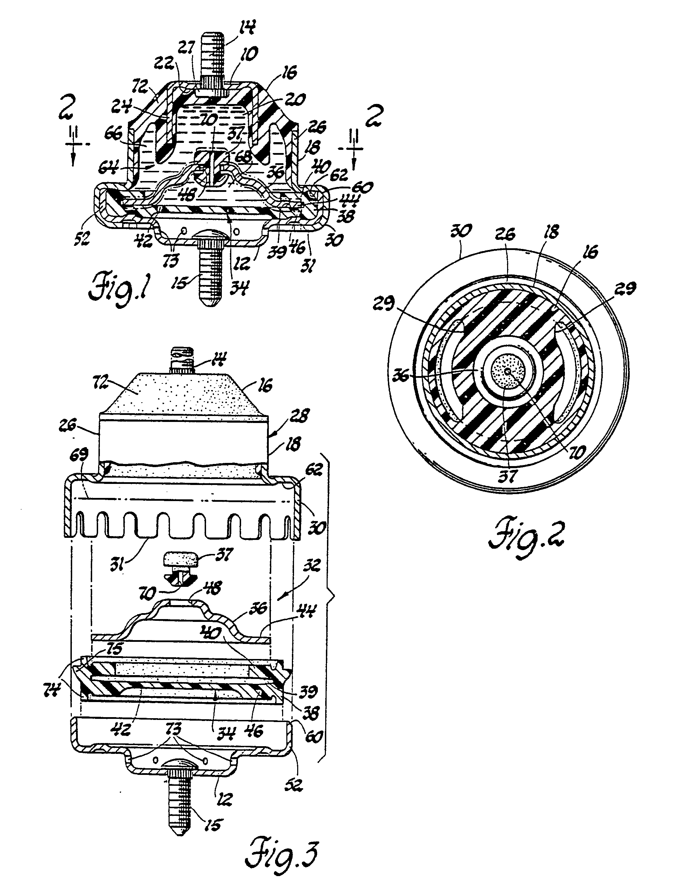

In Figures 1 to 3 of the drawings, there is shown a preferred embodiment of a hydraulic-elastomeric mount in accordance with the present invention, adapted for mounting an engine in a vehicle. The mount has a generally stepped cylindrical shape, and comprises a pair of stamped sheet metal mounting members 10 and 12 which have a circular cup-shaped and saucer-shaped configuration respectively. The mounting members 10 and 12 are arranged with their concave sides facing each other, and have respective studs 14 and 15 secured to the centres thereof and projecting outwardly therefrom for attachment to an engine (not shown) and to an engine-supporting member such as a frame or cradle (not shown) of the vehicle. A hollow elastomeric body 16 made of natural or synthetic rubber interconnects the mounting members 10 and 12, and for this purpose is moulded about the cup-shaped mounting member 10 and to the interior of a stamped sheet metal hollow retainer 18.

The elastomeric body 16 is configured such that it essentially completely defines a hollow cavity 20 therein covering the bottom 22 and both sides of a cylindrical wall 24 of the mounting member 10 and also the inner side of a cylindrical wall 26 of the hollow retainer 18. The elastomeric body 16 thus completely covers the head 27 of the stud 14, so as to positively prevent any possible leakage therepast whilst also having extensive surface attachment to both the mounting member 10 and the hollow retainer 18. Moreover the mounting member 10, with its stud 14, elastomeric body 16 and the retainer 18 form a subassembly shown and designated as 28 in Figure 3. It will be seen that the subassembly 28 can thus be made with a conventional two-piece mould without separate, loose core pieces, using either injection or transfer moulding, and with little finishing such as flash rubber removal required.

Also, directional rate control is possible by the formation of cavities or voids within the elastomeric body itself. For example the use of diametrically oppositely located arcuate cavities 29 as shown provides the mount with a high (hard) rate in one cross-wise direction and both a relatively soft (low) rate at low amplitudes and a nonlinear high (hard) rate at high amplitudes in a direction transverse thereto (vertical and horizontal direction respectively as viewed from the top in Figure 2), such difference in rates being especially useful in isolating certain combustion engine vibrations, as is well known in the art.

As is shown in Figure 3, the retainer 18 of the subassembly 28 is initially formed with an unfolded collar 30 having a scalloped edge 31 so as to receive a second subassembly 32 that comprises the other mounting member 12, an elastomeric diaphragm 34 of natural or synthetic rubber, a stamped sheet metal circular dish-shaped partition 36 and an orifice member 37. The elastomeric diaphragm 34 has a circular rim section 38 with a radially inwardly facing internal groove 39, and the shoulder 40 on the side of the groove opposite the spanning central portion 42 of the diaphragm is flexible to receive the rim 44 of the partition 36. The partition rim 44 is thus sandwiched, as shown in Figure 1, between the shoulder 40 and the shoulder 46 on the opposite side of the groove, the latter shoulder being formed integral with and extending radially outwardly from the central portion 42 of the diaphragm to join the latter to the rim section 38 of the diaphragm. The partition 36 is positioned with its concave side facing downwardly, and has a central aperture 48 therethrough into which the orifice member 37 of elastomeric material is adapted to be inserted and retained with a slip fit. This slip fit permits limited free travel of the orifice member 37 relative to the partition 36, in addition to limited substantially free or soft travel of the latter provided by compliance of the diaphragm rim 38, and these free travels operate to prevent hydraulic damping below a predetermined low amplitude, as is described in more detail later.

The lower mounting member 12 with its stud 15 is shaped with a collar 52 to receive the rim section 38 of the diaphragm 34 with the partition 36 in place and the orifice member 37 fitted to the latter, with this second subassembly 32 then adapted to be fitted into the yet-to-be-clinched collar 30 of the retainer 18 of the other subassembly 28. In such fitting, the lower mounting member 12 is telescopically received in the retainer collar 30 with the rim section 38 of the diaphragm pressed therebetween, whereafter the scalloped edge 31 of the retainer is clinched over the collar 52 on the lower mounting member to retain all the mount parts together as shown in Figure 1. In the assembly, the upper edge 60 of the lower mounting member 12 engages the radial shoulder 62 of the retainer collar to determine the preload on the diaphragm rim section 38, this playing an important part in amplitude control as well as sealing, as will be described in more detail later.

As is seen in Figure 1, the elastomeric diaphragm 34 closes the elastomeric body 16 so as to form therewith a closed cavity generally designated 64. Furthermore, the partition 36 divides the cavity 64 into a primary chamber 66 enclosed by the elastomeric body 16, and a secondary chamber 68 enclosed by the diaphragm 34. However, prior to the closure of the cavity 64 at assembly, this cavity is substantially filled with a liquid such as a commercial anti-freeze that will not freeze in the environment of the intended usage. This filling is readily accomplished by simply inverting the subassembly 28 and filling to a certain level 69 in the retainer 18 (see Figure 3) such that the secondary chamber 68 is thereby filled through the orifice 70 on fitting and clamping of the subassembly 32.

The orifice member 37 has a central passage 70 of constant diameter which extends centrally therethrough and interconnects the chambers 66 and 68 so as to permit the liquid in the primary chamber to flow at a restricted rate into the secondary chamber upon contraction of the primary chamber, and to permit flow in the opposite direction upon expansion of the primary chamber, to thereby provide a damping effect. Upon contraction of the primary chamber 66, the wall section 72 of the elastomeric body 16 extending angularly between the mounting member 10 and the retainer 18 is caused to bulge outwardly, with the liquid therein being forced to flow through the orifice 70 into the chamber 68 to expand the latter as permitted by the elasticity of the central portion 42 of the diaphragm. Then on a reversal of amplitude resulting in expansion of the primary chamber 66, the stretched central portion 42 of the diaphragm 34 retracts and thereby contracts the secondary chamber 68, so forcing liquid to flow back through the orifice 70 into the primary chamber 66 to complete the cycle. To permit free expansion and contraction of the secondary chamber 68 as appropriate, the space between the diaphragm 34 and the lower mounting member 12 is vented to atmosphere through a plurality of radial holes 73 formed in the latter. Because the diaphragm 34 is configured at its rim section 38 to extend both around and over the rim 44 of the partition 36, not only is a seal formed between the chambers but also a double seal is formed between the chambers and the exterior, resulting in excellent sealed integrity of the mount, as will be described in more detail later.

Moreover, the diaphragm rim section 38 is configured to permit limited substantially free or soft travel of the partition 36 relative to the mounting members 10 and 12 below a predetermined low vibration amplitude of one mounting member relative to the other, and to prevent such relative travel above this amplitude, so that flow through the orifice 70 to effect damping does not occur until such predetermined low vibration amplitude is exceeded. Such free travel of the partition 36 is shown in Figure 1 as being between the two phantom-line positions, and may be as much as ± 1.0 mm depending on the installation. This provides precise amplitude control, and is simply effected with a predetermined compliance of the diaphragm rim 38 as sandwiched between the retainer 18 and the mounting member 12.

To this end, the diaphragm rim 38 is free-formed as shown in Figure 3 so as to have oppositely facing annular sealing beads 74 at the outer perimeter, and thinner but more radially extensive wall sections in the groove shoulders 40 and 46 which sandwich the partition rim 44. There is thus substantially more compliance of the sealing beads 74, which flatten at assembly to effect excellent sealing, while the partition-capturing elastomeric wall sections formed by the shoulders 40 and 46 are preloaded to a predetermined extent dependent on the amplitude responsiveness desired.

Furthermore, as to sealing, there is provided in addition to the face seal beads 74 an intermediate radially projecting annular edge sealing bead 75. The edge sealing bead 75 has an interference fit with the interior of the retainer collar 30, and thereby co-operates with both of the face seal beads 74 to provide double sealing between the chambers 66, 68 and atmosphere.

On the other hand, the hydraulically biased partition 36 is pressed against one or other of the elastomeric shoulders 40 and 46 of the diaphragm so as to maintain tight sealing between the chambers 66 and 68. For example, assuming that the primary chamber 66 is contracting and the hydraulic pressure therein is increasing, the partition 36 is hydraulically pressed into very tight sealing contact with the shoulder 46 while the other shoulder 40 is relaxing with such partition movement, and while the double sealing provided by the sealing beads 74 and 75 remains unaffected because of their effective isolation by reason of their radially outward location relative to the partition. Then when the secondary chamber 68 is contracting and the hydraulic pressure therein is increasing during the remainder of each damping cycle, the partition 36 is hydraulically pressed into very tight sealing contact with the shoulder 40, to thereby maintain tightly sealed integrity between the chambers while the other shoulder 46 relaxes, and while double sealing is maintained between the chambers and atmosphere by the sealing beads 74 and 75.

Accordingly, the earlier-described limited free travel of the orifice member 37, which is shown in Figure 1 as being between the phantom-line positions, operates to effectively increase the displacement of the chamber being contracted to thereby further delay damping, but not to the same extent as is possible with the much larger displaceable chamber surface of the partition 36.

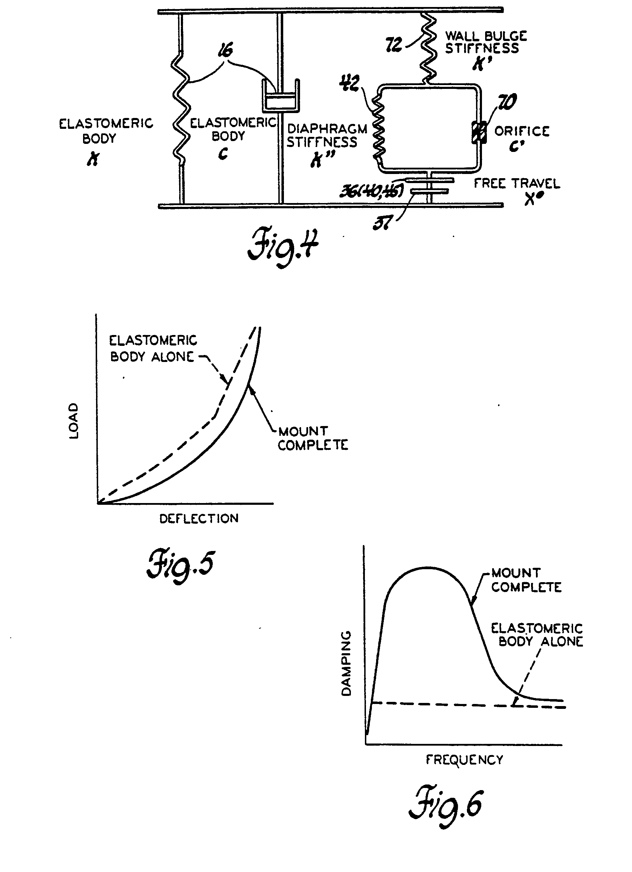

To further assist understanding of the mount, reference will now be made to the mechanical analogy thereof shown in Figure 4, and to the graphs in Figures 5 to 10.

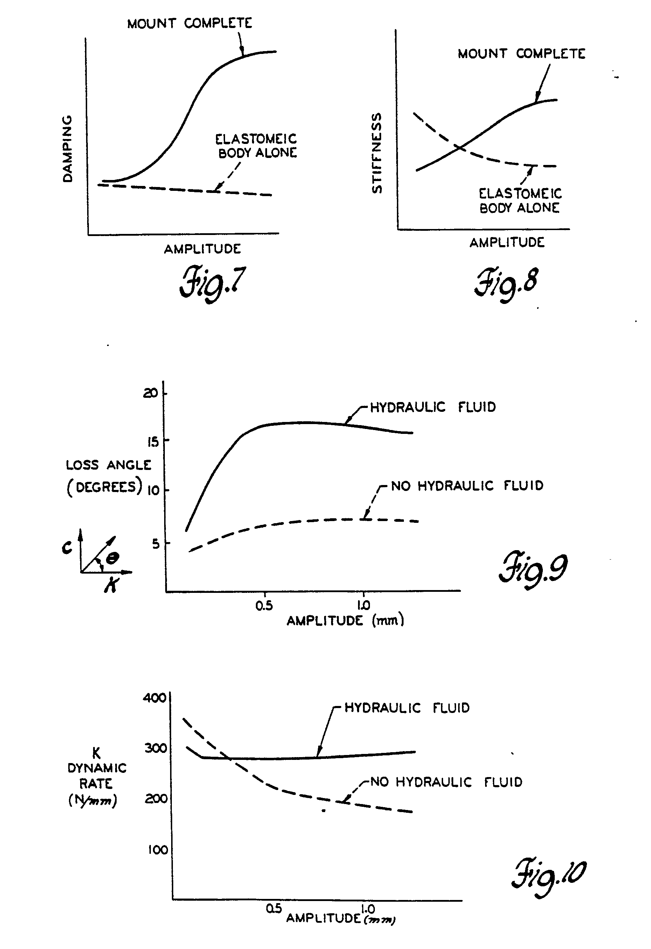

In the mechanical analogy shown in Figure 4, the elastomeric body 16 operating alone (without hydraulic damping) has an inherent spring constant K and a coefficient of damping C, and in typical adaptation without hydraulic damping for a typical vehicle engine installation and with the shape shown would produce the characteristics shown graphically by the dash line in each of Figures 5 to 8. For example, in Figure 5, wherein load is plotted against deflection, there would normally be a distinct transition point (feel) between a desired relatively soft rate over a majority of the deflection range and a hard rate in the remaining, large-deflection range. Because the inherent damping characteristics of rubber are relatively low and substantially constant, there is essentially no damping response either to changes in frequency, as is shown in Figure 6, or to changes in amplitudes, as is shown in Figure 7. Thus damping solely with the elastomeric body cannot readily be made specific to a particularly troublesome frequency, such as one caused by vehicle structure resonance, nor can the damping readily be made specific to a particular amplitude response, as is required in a typical engine installation in which a small damping effect is desired at low amplitude and high frequency of the engine, and a large damping effect is desired at high amplitude and low frequency. Furthermore, with increasing amplitude the rubber normally softens and as a result its stiffness value falls, as is shown in Figure 8, whereas the reverse is desired to assist in amplitude control.

With reference again to the mechanical analogy shown in Figure 4, the hydraulic damping arrangement in conformity with the present invention adds to the spring stiffness K and the coefficient of damping C of the elastomeric body what will be referred to as (1) a wall bulge stiffness K′ resulting from the wall section 72, (2) a diaphragm stiffness K″ resulting from the diaphragm central portion 42, (3) a coefficient of damping C′ resulting from the primary and secondary chambers 66 and 68 and interconnecting orifice 70, and (4) free soft travel X° resulting primarily from the compliance of the diaphragm rim section 38 and secondarily from the slip fit of the orifice member 37. As is shown in the mechanical analogy, the wall bulge stiffness K′ is connected in series with both the diaphragm stiffness K″ and the orifice damping coefficient C′, which are in turn both connected in series with the free travel X°.

The improved result provided by the coaction of all the mount elements is shown by the solid line in each of Figures 5 to 8. For example, as is shown in Figure 5, the deflection is thereby caused to increase gradually with load throughout the deflection range, thereby avoiding any distinct transition point and eliminating a distinct transition feel.

As is shown in Figure 6, on the other hand, the net effective damping with the hydraulic damping C′ is not relatively constant, but is bell-shaped over the frequency range, and by selection of the size of the single orifice 70 and the stiffness K′ and K″ of the body wall section 72 and the diaphragm central portion 42 the damping may be concentrated ("tuned") at a specific frequency so as best to reduce certain troublesome vibrations in a particular installation.

As is shown in Figure 7, with the effective damping no longer relatively constant relative to amplitude or frequency, and because of the free soft travel X°, only a small amount of damping is provided at low amplitudes (high frequency), with the damping thereafter increasing rapidly with amplitude, and substantially levelling off to provide a large amount of damping at high amplitudes (low frequency).

The very desirable advantage of minimum damping at low amplitudes is made possible primarily by the free soft travel of the partition 36 permitted by the compliance of the diaphragm rim shoulders 40 and 46, and secondarily by the fluid displaced by the telescoping motion of the orifice member 37 in consequence of its slip fit in the partition 36.

Further, by reason of the added wall bulge stiffness K′ and diaphragm stiffness K″ coupled with the hydraulic damping, the net effective stiffness does not fall off with amplitude, but rather increases with amplitude, as is illustrated in Figure 8.

Figures 9 and 10 further illustrate the improved performance provided by a hydraulic-elastomeric mount in accordance with the present invention. In Figures 9 and 10, loss angle and dynamic rate respectively are plotted against amplitude, with a comparison of the mount with and without hydraulic fluid. As can be seen in Figure 9, without hydraulic fluid the loss angle as therein defined increases only gradually and by a very small amount with amplitude, whereas with the hydraulic fluid added the loss angle increases steeply with amplitude and by a much greater amount, for example over double the amount, as is desirable, and further this occurs in the lower half of the amplitude range, whereafter the loss angle remains relatively constant. On the other hand, as is shown in Figure 10, without hydraulic fluid the dynamic rate continues to decrease with increasing amplitude, whereas with the addition of the hydraulic fluid the dynamic rate, after an initial fall-off, remains relatively constant.

The hydraulic-elastomeric mount in accordance with the present invention is thus essentially predictable and may be readily adapted and tuned to meet a specific application to give the desired spring stiffness, coefficient of damping and resulting dynamic rate calculated to best isolate a particular set of vibration conditions. Thus by the invention a cost-effective family of mounts is made available, by appropriate selection of such parameters as the durometer value of the rubber used in both the elastomeric body and the diaphragm, the wall section thickness and the angles of the elastomeric body, the preload of the diaphragm, and the diameter, the length and the shape of the insertable orifice.

## Claims

1. A hydraulic-elastomeric mount comprising a pair of mounting members (10 and 12), a hollow elastomeric body (16) interconnecting the mounting members, an elastomeric diaphragm (34) having a rim portion (38) clamped to one of the mounting members between opposed annular clamping portions thereof so as to close the elastomeric body with one side of the diaphragm and form therewith a closed cavity (64), a rigid partition (36) extending between the clamping portions and mounted in the diaphragm rim portion so as to be directly engaged and sandwiched thereby and clamped therewith to the said one mounting member and to divide the cavity (64) into a primary hydraulic chamber (66) enclosed by the elastomeric body and a secondary hydraulic chamber (68) enclosed by the diaphragm, a liquid contained in the chambers, and an orifice (70) through the partition interconnecting the chambers so as to permit liquid in the primary chamber to flow at a restricted rate into the secondary chamber upon contraction of the primary chamber and in the opposite direction on expansion thereof, to thereby provide a damping effect, characterised in that the diaphragm rim portion (38) has on one side thereof an integral annular axially outwardly projecting bead (74) with an axially outwardly facing face sealing portion extending along the length thereof that engages and complies to the associated annular clamping portion on the said one side of the diaphragm on the clamping of the diaphragm rim portion and partition (36) to the said one mounting member to effect tight sealing between the chambers (66, 68) and atmosphere, the diaphragm rim portion on the said one side of the diaphragm has an inwardly facing annular groove (39) radially inwardly of the bead receiving the rim (44) of the partition so as to alone effect the clamped mounting of the same between the clamping portions and also effect tight sealing between the chambers, and the diaphragm rim portion has integral inwardly projecting annular shoulders (40, 46) which form the sides of the groove and are of less effective compliance than the bead and are preloaded to a predetermined degree against the partition on the clamping of the diaphragm rim portion and partition to the said one mounting member so as not to disturb the sealing while permitting limited substantially free reciprocal travel of the partition (36) relative to the said one mounting member.

2. A hydraulic-elastomeric mount according to claim 1, characterised in that one of the mounting members (12) has a retainer member (18) secured thereto, with the hollow elastomeric body (16) operatively connecting the other mounting member (10) to the retainer member, the rim portion (38) of the elastomeric diaphragm (34) is clamped to the said one mounting member between opposed clamping portions on the said mounting member and on the retainer member, and the axially outwardly facing sealing portion of the integral annular axially outwardly projecting bead (74) on the said one side of the diaphragm rim portion engages and complies to the annular clamping portions on the retainer member on the clamping of the diaphragm rim portion and partition (36) to the said one mounting member to effect the tight sealing between the chambers (66, 68) and atmosphere.

3. A hydraulic-elastomeric mount according to claim 1 or 2, characterised in that the orifice (70) is formed in an orifice member (37) that is mounted for limited relative free reciprocal travel in the partition (36) in response to pressure thereon in the chambers (66 and 68), whereby the damping effect is provided only following relative travel of the orifice member in the partition.

4. A hydraulic-elastomeric mount according to any one of claims 1 to 3, characterised in that the diaphragm rim portion (38) provides a face seal (74) on each axial side thereof and an edge seal (75) between the face seals to provide the double seal between the chambers and atmosphere.

## Patentansprüche

1. Hydraulisches Gummilager mit zwei Befestigungselementen (10 und 12), einem die Befestigungselemente verbindenden elastomeren Hohlkörper (16), einer elastomeren Membran (34) mit einem an einem der Befestigungselemente zwischen einander gegenüberliegenden ringförmigen Klemmabschnitten desselben eingeklemmten Randabschnitt (38), um den elastomeren Körper mit einer Seite der Membran abzuschließen und damit einen geschlossenen Hohlraum (64) zu bilden, einer starren Teilwand (36), die sich zwischen den Klemmabschnitten erstreckt und in dem Randabschnitt der Membran so befestigt ist, daß sie direkt an diesem anliegt, von ihm dadurch zu beiden Seiten bedeckt ist und mit diesem an dem einen Befestigungselement verklemmt ist, um den Hohlraum (64) in eine primäre Hydraulikkammer (66), die durch den elastomeren Körper umschlossen ist, und eine sekundäre Hydraulikkammer (68), die durch die Membran umschlossen ist, zu unterteilen, mit einer in den Kammern enthaltenen Flüssigkeit und einer Strömungsöffnung (70) durch die Teilwand, welche die Kammern so mit einander verbindet, daß der Flüssigkeit in der Primärkammer bei einer Kontraktion derselben ein Ausfließen mit begrenzter Rate in die Sekundärkammer möglich ist und bei einer Dehnung der Primärkammer ein Fließen in entgegengesetzter Richtung, um dadurch eine Dämpfwirkung zu schaffen, dadurch gekennzeichnet, daß der Randabschnitt (38) der Membran an einer Seite einen integralen, ringförmigen, axial nach außen vorstehenden Wulst (74) besitzt mit einem axial nach außen gewendeten Flächendichtabschnitt, der sich über die ganze Länge erstreckt, an dem zugeordneten ringförmigen Klemmabschnitt an der einen Seite der Membran anliegt und beim Verklemmen des Membran-Randabschnittes und der Teilwand (36) mit dem einen Befestigungselement nachgibt, um eine gute Abdichtung zwischen den Kammern (66, 68) und der Umgebung zu bewirken, daß der Membran-Randabschnitt an der einen Seite der Membran eine nach innen gewendete Ringnut (39) radial innerhalb des Wulstes besitzt, die den Rand (44) der Teilwand aufnimmt, um so allein die Klemmbefestigung derselben zwischen den Klemmabschnitten und auch Abdichtung zwischen den Kammern zu bewirken, und daß der Membran-Randabschnitt integral nach innen abstehende Ringschultern (40, 46) besitzt, die die Seitenwände der Nut bilden und von weniger wirksamer Nachgiebigkeit als der Wulst sind und bis zu einem vorbestimmten Ausmaß gegen die Teilwand beim Verklemmen des Membranrandabschnittes und der Teilwand mit dem einen Befestigungselement vorbelastet sind, um so nicht die Abdichtung zu stören, gleichzeitig aber eine begrenzte, im wesentlichen freie Hin- und Her-Bewegungsstrecke der Teilwand (36) relativ zu dem einen Befestigungselement zuzulassen.

2. Hydraulisches Gummilager nach Anspruch 1, dadurch gekennzeichnet, daß eines der Befestigungselemente (12) ein daran befestigtes Halteteil (18) besitzt, wobei der elastomere Hohlkörper (16) wirksam das andere Befestigungselement (10) mit dem Halteteil verbindet, daß der Randabschnitt (38) der elastomeren Membran (34) mit dem einen Befestigungselement zwischen einander gegenüberliegenden Klemmabschnitten an dem Befestigungselement und an dem Halteteil verklemmt ist und daß der axial nach außen gewendete Dichtabschnitt des integralen, ringförmigen, axial nach außen abstehenden Wulstes (74) an der einen Seite des Membran-Randabschnittes an den ringförmigen Klemmabschnitten an dem Halteelement anliegt und beim Verklemmen des Membran-Randabschnittes und der Teilwand (36) mit dem einen Befestigungselement nachgibt, um die gute Abdichtung zwischen den Kammern (66, 68) und der Umgebung zu bewirken.

3. Hydraulisches Gummilager nach Anspruch 1 oder 2, dadurch gekennzeichnet, daß die Strömungsöffnung (70) in einem Strömungselement (37) gebildet ist, das mit einer begrenzten relativ freien Hin- und Her-Bewegungsstrecke in der Teilwand (36) in Abhängigkeit von dem darauf wirkenden Druck in den Kammern (66 und 68) angebracht ist, wodurch die Dämpfwirkung erst nach einem Relativ-Weg des Strömungselementes in der Teilwand entsteht.

4. Hydraulisches Gummilager nach einem der Ansprüche 1 bis 3, dadurch gekennzeichnet, daß der Membran-Randabschnitt (38) eine Flächendichtung (74) an jeder seiner Axialseiten schafft und eine Kantendichtung (75) zwischen den Flächendichtungen, um die Doppelabdichtung zwischen den Kammern und der Umgebung zu bewirken.

## Revendications

1. Tampon élastomère-hydraulique comprenant une paire de pièces de montage (10 et 12), un corps élastomère creux (16) reliant entre elles ces pièces de montages, un diaphragme élastomère (34) offrant une partie de bord (38) serrée sur l'une des pièces de montage entre des parties de serrage, annulaires et se faisant face, de celle-ci, de manière à fermer le corps élastomère par un côté de ce diaphragme et à former avec lui une cavité fermée (64), une cloison rigide (36) s'étendant entre les parties de serrage et montée dans la partie de bord du diaphragme de manière à recevoir directement le contact de celle-ci et être prise en sandwich par celle-ci et à être serrée avec elle sur ladite première pièce de montage et de manière à diviser la cavité (64) en une chambre hydraulique principale (66) délimitée par le corps élastomère et une chambre hydraulique secondaire (68) délimitée par le diaphragme, un liquide contenu dans ces chambres et un orifice (70) traversant la cloison et reliant entre elles les chambres de manière à permettre au liquide présent dans la chambre principale de s'écouler sous un débit restreint dans la chambre secondaire lors d'une contraction de la chambre principale et dans le sens opposé lors d'une dilatation de celle-ci, de manière à assurer ainsi un effet d'amortissement, caractérisé en ce que la partie de bord (38) du diaphragme présente, sur l'une de ses faces, un bourrelet annulaire et venu de matière (74) faisant saillie axialement vers l'extérieur et présentant une partie d'étanchéité frontale faisant face axialement vers l'extérieur et disposée sur l'étendue de sa longueur, qui vient au contact, en l'épousant élastiquement, de la partie annulaire de serrage associée située sur ladite première face du diaphragme lors du serrage de la partie de bord de ce diaphragme et oe la cloison (36) sur ladite première pièce de montage de façon à réaliser une étanchéité poussée entre les chambres (66, 68) et l'atmosphère, la partie de bord du diaphragme située sur ladite première face du diaphragme présente une gorge annulaire (39) faisant face vers l'intérieur et située radialement à l'intérieur par rapport au bourrelet recevant le bord (44) de la cloison de manière à réaliser seule le montage serré de ce dernier entre les parties de serrage et à réaliser aussi une étanchéité poussée entre les chambres, et la partie de bord du diaphragme possède des épaulements annulaires et venus de matière (40, 46) faisant saillie vers l'intérieur et qui forment les faces de la gorge, sont d'une élasticité moins efficace que le bourrelet et sont précontraints à un degré préfixé contre la cloison lors du serrage de la partie de bord du diaphragme et de la cloison sur ladite première pièce de montage de manière à ne pas nuire à l'étanchéité, tout en permettant un déplacement réciproque sensiblement libre limité de la cloison (36) par rapport à ladite première pièce de montage.

2. Tampon élastomère-hydraulique suivant la revendication 1, caractérisé en ce que l'une des pièces de montage (12) présente un élément de retenue (18) qui est fixé sur elle, le corps élastomère creux (16) reliant en coopération fonctionnelle l'autre pièce de montage (10) à cet élément de retenue, la partie de bord (38) du diaphragme élastomère (34) est serrée sur ladite première pièce de montage entre des parties de serrage se faisant face et situées sur ladite pièce de montage et sur l'élément de retenue, et la partie d'étanchéité, faisant face axialement vers l'extérieur, du bourrelet annulaire et venu de matière (74) faisant saillie axialement vers l'extérieur sur laoite première face de la partie de bord du diaphragme vient au contact, en les épousant élastiquement, des parties annulaires de serrage situées sur l'élément de retenue lors du serrage de la partie de bord du diaphragme et de la cloison (36) sur ladite première pièce de montage de façon à assurer l'étanchéité poussée entre les chambres (66, 68) et l'atmosphère.

3. Tampon élastomère-hydraulique suivant la revendication 1 ou 2, caractérisé en ce que l'orifice (70) est ménagé dans une pièce à orifice (37) qui est montée en vue d'un déplacement réciproque relativement libre limité dans la cloison (36) sous l'effet o'une pression appliquée sur elle dans les chambres (66 et 68), grâce à quoi l'effet d'amortissement n'est assuré qu'à la suite d'un déplacement relatif de la pièce à orifice dans la cloison.

4. Tampon élastomère-hydraulique suivant l'une quelconque des revendications 1 à 3, caractérisé en ce que la partie de bord (38) du diaphragme fournit un joint d'étanchéité frontal (74) sur chacune de ses faces axiales et un joint latéral (75) situé entre les joints frontaux de façon à assurer la double étanchéité entre les chambres et l'atmosphère.

*Fig.1*

*Fig.2*

*Fig.3*

1

ELASTOMERIC
BODY
$X$

ELASTOMERIC
BODY
$C$

DIAPHRAGM
STIFFNESS
$K''$

WALL BULGE
STIFFNESS
$K'$

ORIFICE
$C'$

FREE TRAVEL
$X°$

*Fig.4*

LOAD

ELASTOMERIC
BODY ALONE

MOUNT
COMPLETE

DEFLECTION

*Fig.5*

DAMPING

MOUNT
COMPLETE

ELASTOMERIC
BODY ALONE

FREQUENCY

*Fig.6*

2

MOUNT COMPLETE

DAMPING

ELASTOMEIC
BODY ALONE

AMPLITUDE

*Fig.7*

MOUNT COMPLETE

STIFFNESS

ELASTOMEIC
BODY ALONE

AMPLITUDE

*Fig.8*

20

15

LOSS ANGLE
(DEGREES) 10

5

HYDRAULIC FLUID

NO HYDRAULIC FLUID

0.5        1.0
AMPLITUDE (mm)

*Fig.9*

400

300

K
DYNAMIC
RATE
(N/mm) 200

100

HYDRAULIC FLUID

NO HYDRAULIC FLUID

0.5  AMPLITUDE  1.0
            (mm)

*Fig.10*